# EUROPÄISCHE PATENTSCHRIFT

(11) **EP 4 417 288 B1**
(45) Veröffentlichungstag und Bekanntmachung des Hinweises auf die Patenterteilung: **31.12.2025**
(21) Anmeldenummer: 24154971.6
(22) Anmeldetag: 31.01.2024
(51) Int. Cl.: B01D 29/11, B01D 29/21, B01D 46/00, B01D 46/52

(54) **RINGFILTERELEMENT**
RING FILTER ELEMENT
ÉLÉMENT FILTRANT ANNULAIRE

(30) Priorität: 17.02.2023 DE 102023201391
(43) Veröffentlichungstag der Anmeldung: 21.08.2024
(73) Patentinhaber: Filtration Group GmbH, 74613 Öhringen (DE)
(72) Erfinder: DONAT, Elias, 74613 Öhringen (DE); BORGER, Christoph, 74740 Adelsheim (DE); GAUGLER, Thomas, 74613 Öhringen (DE)
(74) Vertreter: BRP Renaud & Partner mbB Rechtsanwälte Patentanwälte Steuerberater

(56) Entgegenhaltungen:
- US-A1- 2005 103 701
- US-A1- 2006 137 316
- US-A1- 2007 261 377
- US-A1- 2016 096 240

## Beschreibung

Die vorliegende Erfindung betrifft ein Ringfilterelement zum Filtern eines Fluids, vorzugsweise einer Flüssigkeit, gemäß dem Oberbegriff des Anspruchs 1.

Ein gattungsgemäßes Ringfilterelement ist beispielsweise bekannt aus der DE 10 2014 213 796 A1. Ein derartiges Ringfilterelement weist einen ringförmigen Filterkörper aus einem Filtermaterial auf, der zum Filtern des Fluids von dem Fluid durchströmbar ist. Ferner weist ein derartiges Ringfilterelement eine ringförmige Zarge auf, die von dem Fluid durchströmbar ist, an der sich der Filterkörper radial abstützt und die eine Zargenlängsmittelachse aufweist. Dabei ist die Zarge mit einem Band hergestellt, das schraubenförmig um die Zargenlängsmittelachse gewickelt ist und das radiale Öffnungen oder Löcher aufweist, durch die hindurch die Zarge vom Fluid durchströmbar ist. Das Band weist eine Bandlängsrichtung, die sich schraubenförmig um die Zargenlängsmittelachse erstreckt, und eine Bandquerrichtung auf, die sich quer zur Bandlängsrichtung erstreckt. Die Löcher bilden im Band mehrere in der Bandquerrichtung benachbarte Lochreihen, in denen die Löcher in der Bandlängsrichtung aufeinanderfolgen. Innerhalb der jeweiligen Lochreihe weisen die Löcher in der Bandlängsrichtung voneinander einen Lochlängsabstand auf. Die Löcher von Lochreihen, die in der Bandquerrichtung benachbart sind, weisen in der Bandquerrichtung voneinander einen Lochquerabstand auf. Beim bekannten Ringfilterelement ist das Band aus einem harzgetränkten Faserwerkstoff hergestellt. Ferner ist beim bekannten Ringfilterelement der Lochlängsabstand größer als der Lochquerabstand. Hierbei ist unter dem Lochlängsabstand und dem Lochquerabstand der Abstand zwischen den Lochkonturen zu verstehen und nicht der Abstand der Lochmittelpunkte. Anders ausgedrückt beschreiben der Lochlängsabstand und der Lochquerabstand die Stegbreite des verbleibenden Materials zwischen zwei Löchern in der jeweiligen Längsrichtung bzw. Querrichtung. Die Löcher sind beim bekannten Ringfilterelement kreisförmig ausgestaltet.

Weitere Ringfilterelemente dieser Art sind aus der DE 10 2011 115 050 A1 und aus der EP 2 559 471 A2 bekannt, bei denen jedoch die Löcher als elliptische Langlöcher ausgestaltet sind, deren Lochlängsrichtung parallel zur Bandlängsrichtung ausgerichtet ist.

Aus der EP 2 151 268 B1 ist eine Filteranordnung bekannt, die zwei Ringfilterelemente aufweist, die axial aneinandergrenzen. Beide Ringfilterelemente weisen ebenfalls eine mit einem gelochten Band gewickelte Zarge auf. Bei dem einen Ringfilterelement bilden die Löcher im Band genau eine Lochreihe, wobei der Lochlängsabstand größer ist als eine Steigung der Wicklung und somit auch größer als ein Lochquerabstand. Die Löcher sind bei diesem Ringfilterelement kreisförmig ausgestaltet. Beim anderen Ringfilterelement sind die Löcher dagegen rechteckig ausgestaltet, wobei die Löcher im Band mehrere Lochreihen bilden. Dabei ist auch hier der Lochlängsabstand größer als der Lochquerabstand. Ferner erstrecken sich die rechteckigen Löcher mit ihrer größeren Abmessung jeweils parallel zur Bandquerrichtung.

Aus der US 2003/0 230 127 A1 ist ein spiralförmiges Filterrohr aus Blech bekannt, dessen Löcher so in ein Blechband gestanzt werden, dass sich dabei an einer Seite des Blechbands vorstehende Stanzgrate ausbilden. US 2005/103701 A1, US 2007/261377 A1, US 2007/261377 A1 und US 2006/137316 A1 zeigen weitere Ringfilterelemente aus dem Stand der Technik.

Bei einem Ringfilterelement, dessen Filterkörper während des Betriebs radial von außen nach innen durchströmt wird, dient die Zarge zur Abstützung des Filterkörpers, sodass auch bei hohen Differenzdrücken zwischen der außenliegenden Rohseite und der innenliegenden Reinseite ein Kollabieren des Filterkörpers verhindert werden kann. Zur Abstützung vergleichsweise großer Differenzdrücke ist es dabei grundsätzlich möglich, die Zarge aus Metall bzw. mit einem Metallband herzustellen. Zargen, die mit einem schraubenförmig um die Zargenlängsmittelachse gewickelten Band hergestellt sind, können auch als Wickelzarge bezeichnet werden.

Um ein derartiges Ringfilterelement nachhaltig und effizient ausgestalten zu können, ergibt sich ein Zielkonflikt zwischen Materialaufwand und Durchströmungswiderstand. Die Stabilität der Zarge gegenüber den im Betrieb auftretenden Differenzdrücken, hängt neben dem verwendeten Material für das Band und von der Wandstärke des Bands auch wesentlich von der Lochgröße und von der Anzahl der Löcher ab. Der Durchströmungswiderstand der Zarge hängt ebenfalls von der Lochgröße, von der Lochgeometrie und von der Anzahl der Löcher im Band bzw. an der Zarge ab. Je größer der Öffnungsquerschnitt der Löcher und je größer die Anzahl der Löcher, desto geringer ist der Durchströmungswiderstand aufgrund einer zunehmenden Freifläche. Im Unterschied dazu ergibt sich eine verbesserte Stabilität der Zarge bei kleineren Öffnungsquerschnitten der Löcher und einer reduzierten Anzahl an Löchern. Um nun bei einem günstigen Strömungswiderstand eine ausreichende Stabilität für die Zarge erzielen zu können, muss dementsprechend eine vergleichsweise große Wandstärke beim Band verwendet werden, was zu einem vergleichsweise hohen Materialeinsatz führt.

Die vorliegende Erfindung beschäftigt sich mit dem Problem, für ein Ringfilterelement der eingangs genannten Art eine verbesserte oder zumindest eine andere Ausführungsform anzugeben, die sich insbesondere durch eine hohe Effizienz sowie durch Nachhaltigkeit auszeichnet. Insbesondere wird ein geringer Durchströmungswiderstand angestrebt, wobei gleichzeitig eine ausreichend stabile Zarge bei geringem Materialaufwand bereitgestellt werden soll.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Löcher im Band so anzuordnen, dass sie sich stärker in weniger belasteten Bereichen des Bands und weniger in stärker belasteten Bereichen des Bands erstrecken. Besonders einfach wird dies dadurch erreicht, dass der Lochlängsabstand kleiner ist als der Lochquerabstand. Außerdem wird für hohe Druckdifferenzen vorgeschlagen, die Zarge zweckmäßig aus Metall herzustellen, sodass es sich beim Band bevorzugt um ein Metallband handelt.

Die Erfindung nutzt hierbei die Erkenntnis, dass im Betrieb des Ringfilterelements der Differenzdruck an der Zarge radial angreift und innerhalb der Zarge grundsätzlich in der Zargenumfangsrichtung abgetragen wird. Da die Zarge jedoch gelocht ist, stehen die Löcher nicht zur Übertragung der Kräfte zur Verfügung. Untersuchungen haben nun gezeigt, dass bei Wickelzargen mitgeringem Durchströmungswiderstand, die sich durch eine hohe Anzahl an Löchern sowie durch Löcher mit vergleichsweise großem Öffnungsquerschnitt auszeichnen, besonders große Kräfte bzw. Spannungsspitzen zwischen Löchern benachbarter Lochreihen ausbilden. In diesen Bereichen wird bei Überlast dann auch zuerst die Druckfestigkeit des verwendeten Bandmaterials erreicht. Durch den erfindungsgemäßen Vorschlag, den Lochquerabstand größer zu wählen als den Lochlängsabstand, wird erreicht, dass in den stärker belasteten Bereichen der Zarge mehr Bandmaterial zur Verfügung steht, nämlich in der Bandquerrichtung, während in der Bandlängsrichtung weniger Bandmaterial bereitgestellt wird, was jedoch für die Löcher zur Verfügung steht. Auf diese Weise entsteht ein helixförmiger, massiver, also nicht von Löchern durchsetzter Materialstreifen, welcher die orthogonal zur Mittelachse der Zarge auftretenden Normalkräfte aufzunehmen vermag. Untersuchungen haben gezeigt, dass diese Maßnahme die Spannungsspitzen im Bandmaterial zwischen den Löchern benachbarter Lochreihen signifikant reduziert. Durch diese Maßnahme ist es insbesondere möglich, bei gleichem Materialaufwand und bei gleicher durchströmbarer Querschnittsfläche, die durch die Größe und Anzahl der Löcher definiert wird, eine größere Druckstabilität für die Zarge zu erzielen. Ebenso ist es dadurch möglich, bei gleicher Druckstabilität den Materialaufwand und/oder den Durchströmungswiderstand zu reduzieren. Mehr durchströmbarer Querschnitt reduziert den Materialaufwand und den Durchströmungswiderstand. Eine geringere Wandstärke des Bands reduziert den Materialaufwand. Zusammengefasst zeichnet sich das erfindungsgemäße Ringfilterelement durch einen geringen Durchströmungswiderstand in Verbindung mit einem geringen Materialaufwand bei ausreichend Druckstabilität aus, wodurch das Ringfilterelement besonders effizient und nachhaltig ist.

Je nach Filtrationsrichtung drückt die Strömung bzw. der Differenzdruck den Filterkörper radial nach innen oder radial nach außen. Die Zarge kann in Abhängigkeit der für das Ringfilterelement vorgesehenen Filtrationsrichtung als Innenzarge oder als Außenzarge ausgestaltet sein. Die Innenzarge ist radial innerhalb des Filterkörpers angeordnet, so dass sich der Filterkörper daran radial nach innen abstützen kann. Die Außerzarge ist radial außerhalb des Filterkörpers angeordnet, so dass sich der Filterkörper daran radial nach außen abstützen kann.

Entsprechend einer vorteilhaften Ausführungsform können die Löcher als Langlöcher ausgestaltet sein und jeweils eine Lochlängsrichtung aufweisen. Durch die Ausgestaltung der Löcher als Langlöcher ist es insbesondere möglich, die Löcher in Richtung der weniger belasteten Bereiche des Bandmaterials zu vergrößern und/oder in Richtung des stärker belasteten Bandmaterials zu verkleinern, wobei insgesamt der durchströmbare Querschnitt der Löcher konstant gehalten oder sogar vergrößert werden kann, während die Stabilität der Zarge verbessert wird.

Besonders zweckmäßig ist eine Weiterbildung, bei der die Lochlängsrichtung gegenüber der Bandlängsrichtung und gegenüber der Bandquerrichtung geneigt ist. Damit erstrecken sich die Langlöcher weder in der Bandlängsrichtung noch in der Bandquerrichtung, was die Reduzierung des Lochlängsabstands begünstigt. Zudem verbleiben auf diese Weise Materialstege in zur Längsmittelachse umlaufenden Richtung, die in Normalrichtung auf die Mantelfläche der Zarge auftretenden Kräfte optimal aufnehmen können. Die Materialstege können sich dabei insbesondere Ringförmig geschlossen in einer senkrecht zur Längsmittelachse der Zarge verlaufenden Ebene erstrecken, was zu einer besonders hohen Druckstabilität führt.

Besonders vorteilhaft ist dabei eine Ausgestaltung, bei der die Lochlängsrichtung gegenüber der Bandlängsrichtung um einen Neigungswinkel von maximal 45°, insbesondere von maximal 40°, bevorzugt von maximal 30° geneigt ist. Ein derartiger Neigungswinkel hat sich als besonders vorteilhaft herausgestellt, um die Löcher in Richtung der weniger belasteten Bereiche des Bandmaterials auszudehnen.

Die Löcher besitzen grundsätzlich einen runden Querschnitt bzw. eine abgerundete Kontur, um Spannungsspitzen am Öffnungsrand zu vermeiden. Die Langlöcher können grundsätzlich oval oder elliptisch sein.

Bei einer vorteilhaften Ausführungsform können die Löcher rautenförmig ausgestaltet sein und im freien Öffnungsquerschnitt zwei unterschiedlich lange Diagonalen aufweisen, wobei die längere Diagonale die Lochlängsrichtung definiert. Es ist klar, dass bei rautenförmigen Löchern die Ecken abgerundet sind, um Spannungsspitzen im Öffnungsrand zu vermeiden. Rautenförmige Löcher mit unterschiedlich langen Diagonalen bilden ebenfalls Langlöcher, sodass insbesondere auch das vorstehend zur Ausrichtung der Lochlängsrichtung Gesagte bei den rautenförmigen Löchern optional realisierbar ist.

Besonders vorteilhaft ist dabei eine Konfiguration, bei der ein Lochdurchmesser in der Lochlängsrichtung größer ist als der Lochlängsabstand und größer ist als der Lochquerabstand. Ebenso ist eine Konfiguration denkbar, bei welcher der Lochdurchmesser kreisförmige Löcher oder der senkrecht zur Lochlängsrichtung gemessene kleinste Lochdurchmesser der Langlöcher größer ist als der Lochlängsabstand und/oder größer ist als der Lochquerabstand. Insbesondere kann auch bei den rautenförmigen Löchern die größere Diagonale und insbesondere auch die kleinere Diagonale größer sein als der Lochlängsabstand und/oder größer sein als der Lochquerabstand.

Das Metallband weist zwei zur Bandlängsrichtung parallel verlaufende und in der Bandquerrichtung voneinander beabstandete Längsseitenränder auf. Bei der Wickelzarge grenzen diese Längsseitenränder entlang einer sich schraubenförmig erstreckenden Kontaktzone aneinander an. Bei einer Wickelfalzzarge sind die Längsseitenränder entlang der Kontaktzone durch eine Bördelung oder Falzung miteinander verbunden. Bei einer Wickelschweißzarge sind die Längsseitenränder entlang der Kontaktzone miteinander verschweißt, also mittels einer Schweißverbindung miteinander verbunden. Diese Schweißverbindung kann dabei durch mehrere entlang der Kontaktzone aufeinanderfolgende, voneinander beabstandete Schweißpunkte oder Schweißnähte gebildet sein. Ebenso ist eine entlang der Kontaktzone durchgehende Schweißnaht denkbar. Bevorzugt kommt hier eine Wickelschweißzarge zum Einsatz, da es sich gezeigt hat, dass die Schweißverbindung das Gefüge im Metall des Metallbands im Bereich der Kontaktzone verändert, und zwar hinsichtlich einer verbesserten Steifigkeit und Stabilität. Das zum Herstellen der Wickelzarge verwendete Metallband benötigt eine gewisse Flexibilität, um das Metallband entsprechend wickeln zu können. Durch die Schweißverbindung wird diese Elastizität im Bereich der Kontaktzone entsprechend reduziert, was zur erhöhten Aussteifung führt.

Besonders zweckmäßig ist dabei eine Konfiguration, bei der das Metallband an wenigstens einem Längsseitenrand eine in der Kontaktzone verlaufende Versteifungssicke aufweist, die in die Schweißverbindung eingebunden ist. Mithilfe der Versteifungssicke wird der jeweilige Längsseitenrand ausgesteift, wobei durch die Schweißverbindung diese Versteifung zusätzlich stabilisiert wird.

Gemäß der vorliegenden Erfindung weist das Metallband wenigstens eine parallel zur Bandlängsrichtung verlaufende Versteifungssicke auf, die in der Bandquerrichtung zwischen zwei zur Bandlängsrichtung parallel verlaufenden und in der Bandquerrichtung voneinander beabstandeten Längsseitenrändern des Metallbands angeordnet ist. Die Versteifungssicke repräsentiert eine dreidimensionale, linienförmige Erhebung oder Vertiefung an einer Seite des Metallbands. Zweckmäßig ist das Metallband so gewickelt, dass die jeweilige Versteifungssicke an der Zarge radial nach innen vorsteht, wenn die Zarge als Innenzarge ausgestaltet ist, und radial nach außen vorsteht, wenn die Zarge als Außenzarge ausgestaltet ist. Auf diese Weise kann eine nachteilige Wechselwirkung mit dem Filterkörper vermieden werden. Je nach der in der Bandquerrichtung gemessene Bandbreite können ein, zwei oder mehr derartige parallel zueinander verlaufende Versteifungssicken in das Metallband eingebracht sein.

Zweckmäßig kann die jeweilige Versteifungssicke im Metallband so positioniert sein, dass sie außerhalb der Lochreihen verläuft, also bezüglich der Bandquerrichtung zwischen zwei benachbarten Lochreihen oder zwischen einer Lochreihe und dem dazu benachbarten Längsseitenrand.

Gemäß einer anderen Ausführungsform kann das Metallband mehrere Versteifungsbeulen aufweisen, die sich in der Bandlängsrichtung und in der Bandquerrichtung erstrecken. Auch diese Versteifungsbeulen führen zu einer Aussteifung der Zarge. Die Versteifungsbeulen können in der Bandlängsrichtung und in der Bandquerrichtung größer sein als die Löcher, so dass die jeweilige Versteifungsbeule in der Bandlängsrichtung mindestens doppelt so groß ist wie ein Loch und in der Bandquerrichtung mindestens so groß ist wie ein Loch. Dabei kann vorgesehen sein, dass zumindest eine Lochreihe durch eine solche Versteifungsbeule hindurch läuft. Alternativ können die Beulen auch so ausgestaltet sein, dass sie zwischen benachbarten Löchern, insbesondere zwischen vier zueinander benachbarten Löchern liegen. Die Beulen können dort das zwischen den benachbarten Löchern liegende Material bestmöglich plastisch verformen, ohne jedoch die Randkontur der Löcher selbst zu erreichen. Der Randbereich der Löcher bleibt somit unverformt in Form eines in der gedachten Mantelfläche der Zarge liegenden Ringes um das jeweilige Loch bestehen. Die jeweilige Versteifungsbeule bildet am Metallband eine Vertiefung oder eine Erhebung. Zweckmäßig können die Versteifungsbeulen am Metallband so angebracht sein, dass sie auf derselben Seite des Metallbands vorstehen. Besonders vorteilhaft kann nun das Metallband so gewickelt sein, dass die Versteifungsbeulen an der Zarge radial nach innen abstehen, wenn die Zarge als Innenzarge ausgestaltet ist, und radial nach außen abstehen, wenn die Zarge als Außenzarge ausgestaltet ist. Auf diese Weise kann eine nachteilige Wechselwirkung mit dem Filterkörper vermieden werden.

Sofern das Metallband wenigstens eine der vorstehend genannten Versteifungssicken aufweist, kann zweckmäßig vorgesehen sein, dass die Versteifungsbeulen in der Bandquerrichtung zwischen einer solchen Versteifungssicke und dem dazu benachbarten Längsseitenrand oder zwischen zwei in der Bandquerrichtung benachbarten Versteifungssicken angeordnet sind. Demnach verlaufen die Versteifungssicken nicht durch die Versteifungsbeulen hindurch, sondern außerhalb davon.

Gemäß einer anderen vorteilhaften Ausführungsform können die Löcher gestanzt sein, derart, dass sich ein das jeweilige Loch einfassender Stanzgrat ausbildet, der an einer Seite des Metallbands vom Metallband absteht. Zweckmäßig erfolgt das Stanzen der Löcher so, dass die Stanzgrate der gestanzten Löcher an derselben Seite des Metallbands abstehen. Zweckmäßig kann nun das Metallband so gewickelt sein, dass die Stanzgrate der gestanzten Löcher an der Zarge radial nach innen abstehen, wenn die Zarge als Innenzarge ausgestaltet ist, und radial nach außen abstehen, wenn die Zarge als Außenzarge ausgestaltet ist. Hierdurch wird einerseits eine nachteilige Wechselwirkung mit dem Filterkörper reduziert. Andererseits kann dadurch die Durchströmung der Löcher begünstigt werden, was den Durchströmungswiderstand reduziert.

Bei einer anderen vorteilhaften Ausführungsform können die Löcher in wenigstens zwei benachbarten Lochreihen in der Bandlängsrichtung zueinander einen Versatz aufweisen. Dieser Versatz sowie ein Zargendurchmesser der Zarge und eine in der Bandquerrichtung gemessene Bandbreite des Metallbands können außerdem so aufeinander abgestimmt sein, dass Löcher, die an der Zarge in einer parallel zur Zargenlängsmittelachse verlaufenden Zargenlängsrichtung aufeinanderfolgen, in einer um die Zargenlängsmittelachse umlaufenden Zargenumfangsrichtung zueinander versetzt sind. Diese Ausführungsform ist insbesondere für den Fall von Vorteil, bei dem das Filtermaterial plissiert oder gefaltet ist, sodass der Filterkörper als Faltenstern ausgestaltet ist. Ein innenliegender Falz dieses Faltensterns erstreckt sich in der Zargenlängsrichtung und liegt an der Zarge an. Durch den vorstehend genannten Versatz in der Zargenumfangsrichtung von Löchern, die in der Zargenlängsrichtung benachbart sind, kann auch bei einem breiten Falz eine Abdeckung aller Löcher, die in der Zargenlängsrichtung aufeinanderfolgen, vermieden werden.

Zudem kann im Bereich der helixförmig verlaufenden Schweißnaht zur zusätzlichen Versteifung der Zarge zusätzliches Material eingetragen werden. Dies kann durch das Einbringen von Schweißzusätzen in das Schmelzbad beispielsweise in Form der Zugabe von Fülldraht erzielt werden. So kann eine Schweißnaht resultieren, welche eine größere Materialstärke als das Blechband der Zarge aufweist. Diese erhabene Schweißnaht kann hierbei nach radial innen gerichtet sein, insbesondere bei einer als Innenzarge ausgestalteten Zarge, oder radial nach außen gerichtet sein, insbesondere bei einer als Außenzarge ausgestalteten Zarge. Alternativ kann die Schweißnaht beidseitig erhaben sein. Alternativ kann im Zuge des Schweißens ein weiteres Bauteil fest mit der Zarge verbunden werden. Hierbei kann in den Schweißspalt, also zwischen die Seitenflächen der aneinandergrenzende Blechstreifen, ein nach innen oder alternativ nach außen herausragender, helixartig entlang der Schweißnaht verlaufender Stützkörper eingeschweißt werden. Beide Maßnahmen führen zu einem helixartig verlaufenden Bereich, der gegenüber an der Mantelfläche der Zarge in Normalrichtung angreifenden Kräften, eine hohe Steifigkeit aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Ansprüche definierten Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Figur 1: eine stark vereinfachte Seitenansicht eines Ringfilterelements mit geschnittenem Filterkörper und einer exemplarischen Ausgestaltung einer Zarge,
- Figur 2: eine Seitenansicht eines Längsabschnitts der Zarge bei einer anderen Ausführungsform,
- Figur 3: ein vergrößerter Ausschnitt der Zarge aus Figur 2,
- Figur 4: eine Seitenansicht eines Längsabschnitts der Zarge bei einer weiteren Ausführungsform,
- Figur 5: ein vergrößerter Ausschnitt der Zarge aus Figur 4,
- Figur 6: ein Querschnitt der Zarge im Bereich eines Lochs bei einer weiteren Ausführungsform.

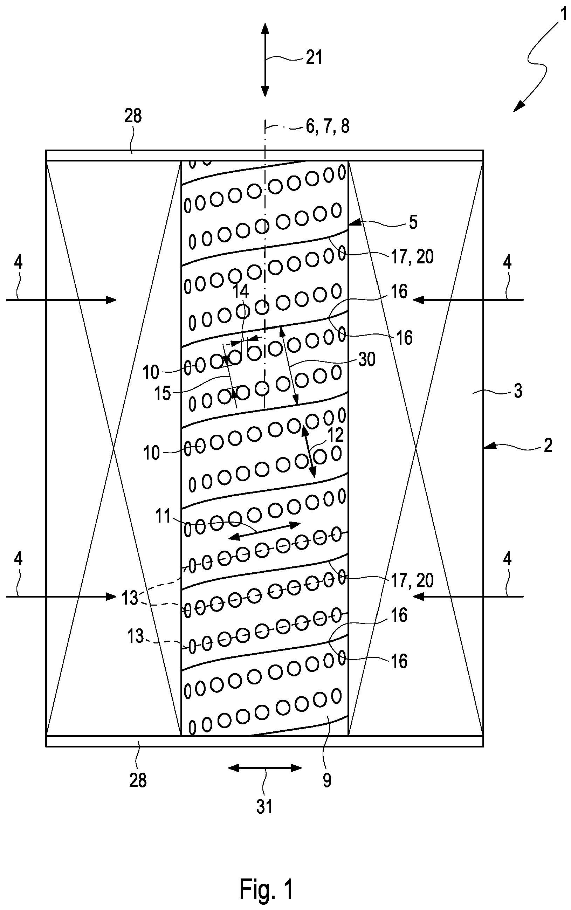

Entsprechend Figur 1 umfasst ein Ringfilterelement 1, das zum Filtern eines Fluids, vorzugsweise einer Flüssigkeit, dient, einen ringförmigen Filterkörper 2 aus einem Filtermaterial 3, der zum Filtern des Fluids von dem Fluid durchströmbar ist. Die Durchströmung des Ringfilterelements 1 bzw. des Filterkörpers 2 während des Betriebs des Ringfilterelements 1 ist in Figur 1 durch Pfeile angedeutet und mit 4 bezeichnet. Dementsprechend erfolgt die Durchströmung 4 des Ringfilterelements 1 im gezeigten Beispiel radial von außen nach innen. Es ist klar, dass bei einer anderen Ausführungsform die Durchströmungsrichtung bzw. Filtrationsrichtung auch umgekehrt sein kann, also von radial innen nach außen. Das Filtermaterial 3 kann zweckmäßig gefaltet sein, so dass der Filterkörper 2 einen Faltenstern bildet. Alternativ dazu kann das Filtermaterial 3 auch um eine Längsmittelachse 7 des Filterkörpers 2 gewickelt sein. Das Filtermaterial 3 kann einlagig oder mehrlagig sein.

Das Ringfilterelement 1 umfasst außerdem eine ringförmige Zarge 5. Die Zarge 5 ist beim dargestellten Beispiel als Innenzarge ausgestaltet und innerhalb des Filterkörpers 2 angeordnet. Bei umgekehrter Filtrationsrichtung ist die Zarge 5 dann zweckmäßig als Außenzarge ausgestaltet und außerhalb des Filterkörpers 2 angeordnet. Vorzugsweise ist die Zarge 5 aus Metall hergestellt. Die Zarge 5 ist vom Fluid durchströmbar und weist eine Zargenlängsmittelachse 6 auf. Die Zargenlängsmittelachse 6 fällt dabei mit der Längsmittelachse 7 des Filterkörpers 2 sowie mit einer Längsmittelachse 8 des Ringfilterelements 1 zusammen. Die Radialrichtung steht senkrecht auf der Zargenlängsmittelachse 6. Das Ringfilterelement 1 weist außerdem zwei Endscheiben 28 auf, die den Filterkörper 2 axial abdichten. Die Zarge 5 kann an den Endscheiben 28 befestigt sein. Zumindest eine der Endscheiben 28 ist als offene Endscheibe konfiguriert, so dass sie eine Öffnung aufweist, die zum Innenraum des Ringfilterelements 1, hier der Zarge 5, offen ist.

Die Zarge 5 ist aus einem Band 9 hergestellt, bei dem es sich bevorzugt um ein Metallband handelt, das im Folgenden ebenfalls mit dem Bezugszeichen 9 versehen ist. Das Band bzw. das Metallband 9 ist schraubenförmig um die Zargenlängsmittelachse 6 gewickelt und besitzt radiale Löcher 10, durch die hindurch die Zarge 5 vom Fluid durchströmbar ist. Bei der bevorzugten Durchströmung 4 radial von außen nach innen umschließt die Zarge 5 einen reinseitigen Innenraum, während der Filterkörper 2 von einem rohseitigen Außenraum umhüllt ist. Der Filterkörper 2 stützt sich radial innen an der Zarge 5 ab, sodass das Ringfilterelement 1 vergleichsweise hohe Differenzdrücke zwischen der außenliegenden Rohseite und der innenliegenden Reinseite toleriert.

Das Metallband 9 besitzt eine Bandlängsrichtung 11, die sich schraubenförmig um die Zargenlängsmittelachse 6 erstreckt. Das Metallband 9 besitzt außerdem eine Bandquerrichtung 12, die sich senkrecht zur Bandlängsrichtung 11 erstreckt. Die Löcher 10 bilden im Metallband 9 mehrere in der Bandquerrichtung 12 benachbarte Lochreihen 13 aus, die in den Figuren 1 bis 5 mit unterbrochener Linie angedeutet sind. Diese Lochreihen 13 erstrecken sich dabei parallel zur Bandlängsrichtung 11, also ebenfalls schraubenförmig bezüglich der Zargenlängsmittelachse 6. In den Lochreihen 13 folgen die Löcher 10 in der Bandlängsrichtung 11 auf einander. Innerhalb der jeweiligen Lochreihe 13 besitzen in der Bandlängsrichtung 11 benachbarte Löcher 10 jeweils einen Lochlängsabstand 14. Löcher 10 in Lochreihen 13, die in der Bandquerrichtung 12 zueinander benachbart sind, weisen in der Bandquerrichtung 12 voneinander einen Lochquerabstand 15 auf. Beim hier vorgestellten Ringfilterelement 1 ist das Lochbild des Metallbands 9 so konfiguriert, dass der Lochlängsabstand 14 kleiner als der Lochquerabstand 15 ist.

Hierbei ist unter dem Lochlängsabstand 14 und unter dem Lochquerabstand 15 der Abstand zwischen den Lochkonturen zu verstehen und nicht der Abstand der Lochmittelpunkte. Damit beschreibt der Lochlängsabstand 14 bzw. der Lochquerabstand 15 die Stegbreite des verbleibenden Materials zwischen zwei Löchern 10 in der Bandlängsrichtung 11 bzw. in der Bandquerrichtung 12.

Das Metallband 9 weist zwei zur Bandlängsrichtung 11 parallel verlaufende und in der Bandquerrichtung 12 voneinander beabstandete Längsseitenränder 16 auf, die entlang einer Kontaktzone 17 aneinandergrenzen, wobei sich die Kontaktzone 17 ebenfalls schraubenförmig bezüglich der Zargenlängsmittelachse 6 erstreckt. Entlang dieser Kontaktzone 17 sind die aneinander angrenzenden Längsseitenränder 16 aneinander befestigt, um die gewickelte Zarge 5 zu bilden.

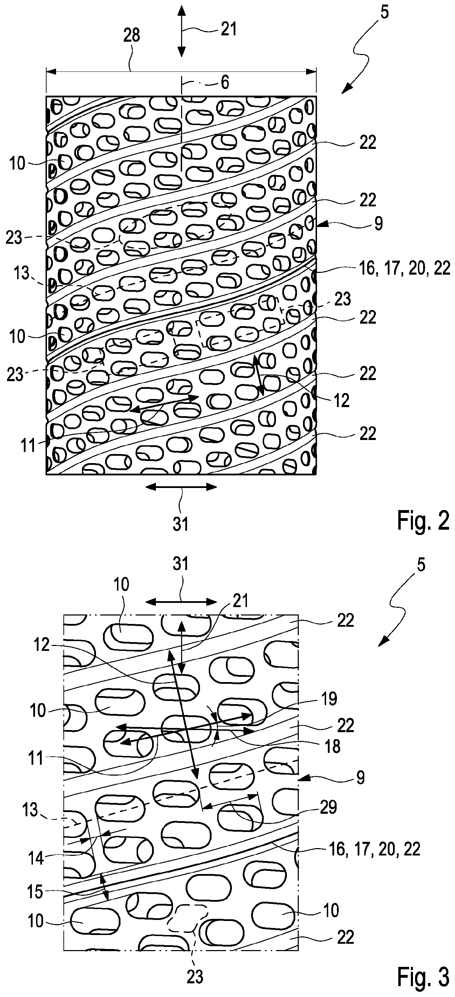

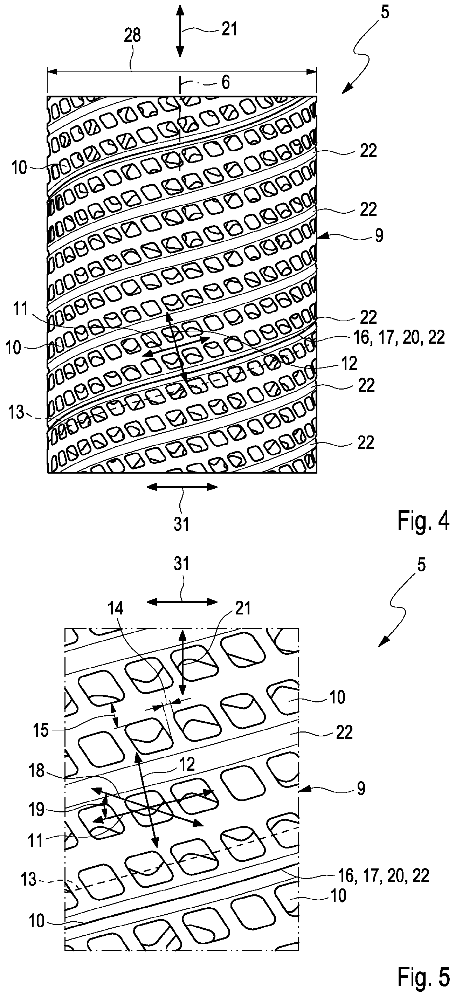

Entsprechend den Figuren 2 bis 5 können die Löcher 10 als Langlöcher ausgestaltet sein, die jeweils eine Lochlängsrichtung 18 aufweisen. Die Lochlängsrichtung 18 ist dabei in den vergrößerten Ansichten der Figuren 3 und 5 eingezeichnet. Sie ist beim jeweiligen Langloch 10 durch die Ausrichtung des jeweils längsten oder größten Durchmessers definiert. Bei der in den Figuren 2 und 3 gezeigten Ausführungsform sind die Löcher 10 oval oder elliptisch konfiguriert. Bei der in den Figuren 4 und 5 gezeigten Ausführungsform sind die Löcher 10 rautenförmig konfiguriert. Die jeweilige Raute besitzt zwei Diagonalen, die bei den hier gezeigten Löchern 10 unterschiedlich lang sind. Die Ausrichtung der längeren Diagonalen definiert dabei die Lochlängsrichtung 18.

Gemäß den Figuren 2 bis 5 ist bei den hier gezeigten bevorzugten Ausführungsformen die Lochlängsrichtung 18 sowohl gegenüber der Bandlängsrichtung 11 als auch gegenüber der Bandquerrichtung 12 geneigt. Im Beispiel der Figur 3 beträgt ein Neigungswinkel 19 zwischen der Lochlängsrichtung 18 und der Bandlängsrichtung 11 etwa 25°. Im Beispiel der Figur 5 beträgt dieser Neigungswinkel 19 etwa 35°. Der Neigungswinkel 19 kann beispielsweise in einem Bereich von 10° bis 40° und vorzugsweise in einem Bereich von 20° bis 35° liegen, jeweils einschließlich der Bereichsgrenzen. Der Neigungswinkel 19 kann zudem beliebig an die Metallbandbreite sowie an den Durchmesser der Zarge 5 angepasst werden, um festigkeitstechnisch eine individuell optimierte Ausrichtung der Löcher 10 zu erzielen. Dies ist relevant, da mit variierender Metallbandbreite sowie mit variierendem Durchmesser der Zarge 10 die Steigung der schraubenlinienartigen bzw. helixförmigen Blechwicklung variiert, was einen Einfluss auf die Ausrichtung der Löcher 10 in Bezug auf die Zargenlängsmittelachse 6 besitzt.

Durch die hier vorgesehene Ausrichtung der Lochlängsrichtung 18 gegenüber der Bandlängsrichtung 11 wird erreicht, dass sich die Löcher 10 bei ausreichender durchströmbarer Querschnittsfläche hauptsächlich in Bereichen des Metallbands 9 erstrecken, die im Falle einer Druckbelastung weniger stark belastet sind. Die Freifläche der Zarge 5 liegt somit in Bereichen geringerer Spannung im Material. Auf diese Weise steht in Bereichen, in welchen bedingt durch den Kraftfluss erhöhte Spannungen auftreten, innerhalb des Metallbands 9 zwischen den Löchern 10 mehr Material zur Verfügung, wodurch die Ausbildung von Spannungsspitzen reduziert bzw. vermieden werden kann.

Für eine erhöhte Stabilität der Zarge 5 kann optional vorgesehen sein, dass die in der Kontaktzone 17 aneinandergrenzenden Längsseitenränder 16 mit einander verschweißt sind. Eine entsprechende Schweißverbindung ist in Figur 1 exemplarischen mit 20 bezeichnet. Die Schweißverbindung 20 ist vorzugsweise eine Schweißnaht, die sich entlang der Kontaktzone 17 durchgehend erstreckt. Grundsätzlich ist ebenso denkbar, die Schweißverbindung 20 mithilfe mehrerer Schweißpunkte oder Schweißnähte durchzuführen, die entlang der Kontaktzone 17 aufeinanderfolgen und in der Bandlängsrichtung 11 voneinander beabstandet sind. In der Kontaktzone 17 können die Längsseitenränder 16 auf Stoß aneinander anliegenden und miteinander verschweißt sein. Ebenso ist denkbar, dass sich die Längsseitenränder 16 in der Kontaktzone 17 in der Bandquerrichtung 12 bzw. in einer parallel zur Zargenlängsmittelachse 6 verlaufenden Zargenlängsrichtung 21 überlappen.

Zudem kann im Bereich der helixförmig verlaufenden Schweißnaht 20 zur zusätzlichen Versteifung der Zarge 5 zusätzliches Material eingetragen werden. Dies kann durch das Einbringen von Schweißzusätzen in das Schmelzbad, beispielsweise in Form der Zugabe von Fülldraht, erzielt werden. So kann eine Schweißnaht 20 resultieren, welche eine größere Materialstärke als das angrenzende Blechband der Zarge 5 aufweist. Diese erhabene Schweißnaht 20 kann hierbei nach innen und/oder nach außen abstehen bzw. erhaben sein. Alternativ kann im Zuge des Schweißens ein weiteres Bauteil fest mit der Zarge verbunden werden. Hierbei kann in den Schweißspalt, also zwischen die Seitenflächen der aneinandergrenzende Blechstreifen, ein nach innen oder alternativ nach außen herausragender, helixartig entlang der Schweißnaht 20 verlaufender Stützkörper eingeschweißt werden. Beide Maßnahmen führen zu einem helixartig verlaufenden Bereich, welcher gegenüber an der Mantelfläche der Zarge 5 in Normalrichtung angreifenden Kräften, eine hohe Steifigkeit aufweist.

Gemäß den Figuren 2 bis 5 kann das Metallband 9 zumindest an einem der beiden Längsseitenränder 16 eine Versteifungssicke 22 aufweisen, die zweckmäßig in die Schweißverbindung 20 eingebunden ist. Zusätzlich oder alternativ kann das Metallband 9 wenigstens eine weitere Versteifungssicke 22 aufweisen, die parallel zur Bandlängsrichtung 11 verläuft und die in der Bandquerrichtung 12 an einer oder mehreren beliebigen Positionen zwischen den beiden Längsseitenrändern 16 angeordnet ist. In den Beispielen der Figuren 2 und 4 sind jeweils drei derartige Versteifungssicken 22 vorgesehen, die sich bezüglich der Bandquerrichtung 12 zwischen den beiden Längsseitenrändern 16 befinden. Zusätzlich ist hier zumindest eine weitere Versteifungssicke 22 an wenigstens einem der Längsseitenrändern 16, also in der Kontaktzone 17 angeordnet. Die jeweilige Versteifungssicke 22 erstreckt sich dabei bezüglich der Bandquerrichtung 12 zwischen zwei benachbarten Lochreihen 13. Vorzugsweise steht die jeweilige Versteifungssicke 22 an der Innenseite der hier als Innenzarge ausgestalteten Zarge 5 radial nach innen vor. Bei einer als Außenzarge ausgestalteten Zarge 5 steht die jeweilige Versteifungssicke 22 dann nach radial außen vor.

Das Metallband 9 kann außerdem mehrere Versteifungsbeulen 23 aufweisen, die ebenfalls eine Aussteifung des Metallbands 9 bewirken. Zur Veranschaulichung sind in Figur 2, 3 derartige Versteifungsbeulen 23 mit unterbrochener Linie angedeutet. Es ist klar, dass diese Versteifungsbeulen 23 auch bei der Ausführungsform der Figuren 3 und 4 einsetzbar sind. Ferner können die Versteifungsbeulen 23 auch andere Geometrien aufweisen als die exemplarisch gezeigten elliptischen und rechteckigen Geometrien. Die Versteifungsbeulen 23 stehen vom Metallband 9 radial ab und zwar bevorzugt so, dass sie an der als Innenzarge ausgestalteten Zarge 5 radial nach innen vorstehen. Bei einer als Außenzarge ausgestalteten Zarge 5 stehen die Versteifungsbeulen 23 dann radial nach außen vor. Die Versteifungsbeulen 23 erstrecken sich in der Bandlängsrichtung 11 und in der Bandquerrichtung 12 und sind daher flächig, während die vorstehend genannten Versteifungssicken 22 linienförmig sind. Dabei können die Versteifungsbeulen 23 so dimensioniert sein, dass zumindest eine Lochreihe 13 durch eine solche Versteifungsbeule 23 hindurch läuft. Sofern Versteifungsbeulen 23 und Versteifungssicken 22 gleichzeitig zum Einsatz kommen, ist eine Ausführungsform bevorzugt, bei der die Versteifungsbeulen 23 in der Bandquerrichtung 12 zwischen benachbarten Versteifungssicken 22 oder zwischen der Kontaktzone 17 und der dazu benachbarten Versteifungssicke 22 angeordnet sind. Neben Versteifungsbeulen 23, welche durch ihre große Dimensionierung von den Löchern 10 der Zarge 5 durchsetzt sind, sind ebenfalls kleinere Versteifungsbeulen 23 denkbar, welche sich zwischen den Löchern 10 angeordnet befinden, wobei insbesondere der Randbereich der Löcher 10 unverformt bleibt. Rein exemplarisch ist eine solche kleinere Versteifungsbeule 23 in Figur 3 mit unterbrochener Linie angedeutet. Erkennbar erstreckt sich diese Versteifungsbeule 23 zwischen vier benachbarten Löchern 10.

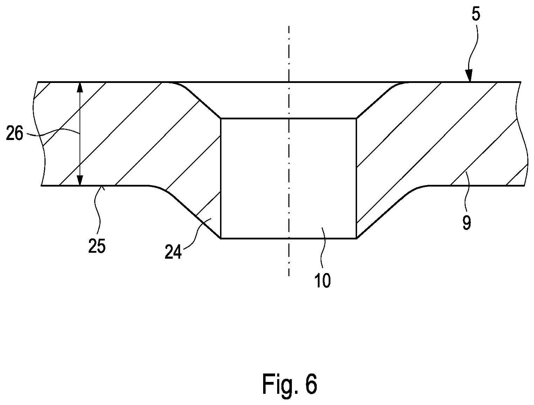

Die Löcher 10 können grundsätzlich auf beliebige Weise hergestellt werden. Bevorzugt werden die Löcher 10 jedoch gestanzt, was sich besonders preiswert realisieren lässt. Figur 6 zeigt einen Querschnitt des Metallbands 9 bzw. der Zarge 5 im Bereich eines gestanzten Lochs 10. Beim Stanzen der Löcher 10 bildet sich ein Stanzgrat 24 aus, der das jeweilige Loch 10 einfasst und der an einer Seite 25 des Metallbands 9 vom Metallband 9 vorsteht oder absteht. In Figur 6 ist dieser Stanzgrat 24 zur Verdeutlichung übertrieben stark ausgebildet. Auch ist hier eine Wandstärke 26 des Metallbands 9 übertrieben groß dargestellt. Bevorzugt ist nun eine Konfiguration bzw. Ausgestaltung, bei der die Stanzgrate der 24 aller Löcher 10 an derselben Seite 25 des Metallbands 9 vom Metallband 9 abstehen. Das Metallband 9 wird ferner so zur Zarge 5 gewickelt, dass die Stanzgrate 24 an der Zarge 5 radial zur Reinseite hin abstehen. Bei der hier gezeigten, als Innenzarge ausgestalteten Zarge 5 stehen die Stanzgrate 24 radial nach innen ab. Sofern die Zarge 5 als Außenzarge ausgestaltet wird, stehen die Stanzgrate 24 zweckmäßig radial nach außen ab. Dies begünstigt die Durchströmung von radial außen nach innen. Ferner können damit nachteilige Wechselwirkungen mit dem Filtermaterial 3 bzw. mit dem Filterkörper 2 vermieden werden. Auch führt ein verbleibender Stanzgrat 24 ebenfalls zur Erhöhung der Steifigkeit und damit zur Erhöhung der Belastbarkeit der Zarge 5.

Im Filterkörper 2 kann das Filtermaterial 3 zick-zack-förmig gefaltet bzw. plissiert sein, wodurch der Filterkörper 2 einen Faltenstern bildet. Damit ein innenliegender Falz des so gefalteten Filterkörpers 2 möglichst wenig durchströmbaren Querschnitt der Löcher 10 abdeckt, wenn er sich an der Zarge 5 abstützt, kann gemäß den Figuren 2 und 3 vorgesehen sein, dass die Löcher 10 in benachbarten Lochreihen 13 in der Bandlängsrichtung 11 zueinander einen Versatz 29 aufweisen. Ein solcher Versatz 29 ist exemplarisch in Figur 3 eingezeichnet. Dieser Versatz 29 und ein in Figur 2 eingetragener Zargendurchmesser 28, bei dem es sich bevorzugt, um den Innendurchmesser 28 der Zarge 5 handelt, sowie eine in der Bandquerrichtung 12 gemessene Bandbreite 30 des Metallbands 9, die exemplarisch in Figur 1 eingetragen ist, können nun zweckmäßig so aufeinander abgestimmt sein, dass gemäß Figur 3 Löcher 10, die an der Zarge 5 in der Zargenlängsrichtung 21 aufeinanderfolgen, in einer in den Figuren 1 bis 5 durch einen Doppelpfeil angedeuteten Zargenumfangsrichtung 31, die um die Zargenlängsmittelachse 6 umläuft, zueinander versetzt sind.

Abweichend zu der in Figur 6 gezeigten Darstellung beträgt die Wandstärke 26 des Metallbands 9 zweckmäßig weniger als 66 % und vorzugsweise weniger als 33 % des maximalen Durchmessers des jeweiligen Lochs 10. Die Anzahl und Größe der Löcher 10 ist zweckmäßig so gewählt, dass im Metallband 9 die Summe der Öffnungsquerschnitte der Löcher 10 mindestens 15 %, vorzugsweise mindestens 25 %, der Fläche des Metallbands 9 einnimmt.

## Patentansprüche

1. Ringfilterelement (1) zum Filtern eines Fluids, vorzugsweise einer Flüssigkeit,
- mit einem ringförmigen Filterkörper (2) aus einem Filtermaterial (3), der zum Filtern des Fluids von dem Fluid durchströmbar ist,
- mit einer ringförmigen Zarge (5), die von dem Fluid durchströmbar ist, an der sich der Filterkörper (2) radial abstützt und die eine Zargenlängsmittelachse (6) aufweist,
- wobei die Zarge (5) mit einem Band (9) hergestellt ist, das schraubenförmig um die Zargenlängsmittelachse (6) gewickelt ist und das radiale Löcher (10) aufweist, durch die hindurch die Zarge (5) vom Fluid durchströmbar ist,
- wobei das Band (9) eine Bandlängsrichtung (11), die sich schraubenförmig um die Zargenlängsmittelachse (6) erstreckt, und eine Bandquerrichtung (12) aufweist, die sich quer zur Bandlängsrichtung (11) erstreckt,
- wobei die Löcher (10) im Band (9) mehrere in der Bandquerrichtung (12) benachbarte Lochreihen (13) bilden, in denen die Löcher (10) in der Bandlängsrichtung (11) aufeinanderfolgen,
- wobei die Löcher (10) innerhalb der jeweiligen Lochreihe (13) in der Bandlängsrichtung (11) voneinander einen Lochlängsabstand (14) aufweisen,
- wobei die Löcher (10) von Lochreihen (13), die in der Bandquerrichtung (12) benachbart sind, in der Bandquerrichtung (12) voneinander einen Lochquerabstand (15) aufweisen,
- wobei das Band (9) ein Metallband (9) ist,
- wobei der Lochlängsabstand (14) kleiner ist als der Lochquerabstand (15), und
- wobei das Metallband (9) wenigstens eine parallel zur Bandlängsrichtung (11) verlaufende Versteifungssicke (22) aufweist, die in der Bandquerrichtung (12) zwischen zwei zur Bandlängsrichtung (11) parallel verlaufenden und in der Bandquerrichtung (12) voneinander beabstandeten Längsseitenrändern (16) des Metallbands (9) angeordnet ist.

2. Ringfilterelement (1) nach Anspruch 1,
**dadurch gekennzeichnet,**
- **dass** die Löcher (10) als Langlöcher ausgestaltet sind und jeweils eine Lochlängsrichtung (18) aufweisen,
- **dass** die Lochlängsrichtung (18) gegenüber der Bandlängsrichtung (11) und gegenüber der Bandquerrichtung (12) geneigt ist.

3. Ringfilterelement (1) nach Anspruch 2,
**dadurch gekennzeichnet,**
- **dass** die Lochlängsrichtung (18) gegenüber der Bandlängsrichtung (11) um einen Neigungswinkel (19) von maximal 45° geneigt ist.

4. Ringfilterelement (1) nach Anspruch 2 oder 3,
**dadurch gekennzeichnet,**
- **dass** die Löcher (10) rautenförmig ausgestaltet sind und zwei unterschiedlich lange Diagonalen aufweisen, wobei die längere Diagonale die Lochlängsrichtung (18) definiert.

5. Ringfilterelement (1) nach einem der vorhergehenden Ansprüchen,
**dadurch gekennzeichnet,**
- **dass** das Metallband (9) zwei zur Bandlängsrichtung (11) parallel verlaufende und in der Bandquerrichtung (12) voneinander beabstandete Längsseitenränder (16) aufweist, die entlang einer sich schraubenförmig erstreckenden Kontaktzone (17) aneinandergrenzen und miteinander verschweißt sind.

6. Ringfilterelement (1) nach Anspruch 5,
**dadurch gekennzeichnet,**
- **dass** das Metallband (9) an wenigstens einem Längsseitenrand (16) eine in der Kontaktzone (17) verlaufende Versteifungssicke (22) aufweist, die in die Schweißverbindung (20) eingebunden ist.

7. Ringfilterelement (1) nach einem der vorhergehenden Ansprüche,
**dadurch gekennzeichnet,**
- **dass** das Metallband (9) mehrere Versteifungsbeulen (23) aufweist, die sich in der Bandlängsrichtung (11) und in der Bandquerrichtung (12) erstrecken.

8. Ringfilterelement (1) nach Anspruch 7,
**dadurch gekennzeichnet,**
- **dass** die Versteifungsbeulen (23) in der Bandquerrichtung (12) zwischen einer solchen Versteifungssicke (22) und dem dazu benachbarten Längsseitenrand (16) oder zwischen zwei in der Bandquerrichtung (12) benachbarten Versteifungssicken (22) angeordnet sind.

9. Ringfilterelement (1) nach Anspruch 7 oder 8,
**dadurch gekennzeichnet,**
- **dass** die Versteifungsbeulen (23) so dimensioniert und angeordnet sind, dass sie sich ausschließlich zwischen benachbarten Löchern (10) befinden, oder
- **dass** die Versteifungsbeulen (23) so dimensioniert und angeordnet sind, dass sich darin zumindest ein Loch (10) befindet.

10. Ringfilterelement (1) nach einem der vorhergehenden Ansprüche,
**dadurch gekennzeichnet,**
- **dass** die Löcher (10) gestanzt sind, so dass sich ein das jeweilige Loch (10) einfassender Stanzgrat (24) ausbildet, der an einer Seite (25) des Metallbands (9) vom Metallband (9) absteht,
- **dass** die Stanzgrate (24) der gestanzten Löcher (10) an derselben Seite (25) des Metallbands (9) abstehen,
- **dass** das Metallband (9) so gewickelt ist, dass die Stanzgrate (24) der gestanzten Löcher (10) an der Zarge (5) radial abstehen.

11. Ringfilterelement (1) nach Anspruch 10,
**dadurch gekennzeichnet,**
- **dass** die Zarge (5) als Innenzarge ausgestaltet ist, die innerhalb des Filterkörpers (2) angeordnet ist, wobei die Stanzgrate (24) an der Innenzarge radial nach innen abstehen, oder
- **dass** die Zarge (5) als Außenzarge ausgestaltet ist, die außerhalb des Filterkörpers (2) angeordnet ist, wobei die Stanzgrate (24) an der Außenzarge radial nach außen abstehen.

12. Ringfilterelement (1) nach einem der vorhergehenden Ansprüche,
**dadurch gekennzeichnet,**
- **dass** die Löcher (10) in wenigstens zwei benachbarten Lochreihen (13) in der Bandlängsrichtung (11) zueinander einen Versatz (29) aufweisen,
- **dass** dieser Versatz (29), ein Zargendurchmesser (28) der Zarge (5) und eine in der Bandquerrichtung (12) gemessene Bandbreite (30) des Metallbands (9) so aufeinander abgestimmt sind, dass Löcher (10), die an der Zarge (5) in einer parallel zur Zargenlängsmittelachse (6) verlaufenden Zargenlängsrichtung (21) aufeinanderfolgen, in einer um die Zargenlängsmittelachse (6) umlaufenden Zargenumfangsrichtung (31) zueinander versetzt sind.

13. Ringfilterelement (1) zumindest nach Anspruch 5,
**dadurch gekennzeichnet,**
- **dass** der Bereich der Schweißverbindung (20) radial innen und/oder radial außen beim Verschweißen durch einen ergänzenden Materialeintrag erhaben ausgestaltet ist, und/oder
- **dass** beim Verschweißen Werkstoffe in die Schweißverbindung (20) eingeschmolzen werden, die beim Erstarren des Schweißbades eine lokale Versprödung und damit eine lokale Steifigkeitserhöhung erzielen.

14. Ringfilterelement (1) zumindest nach Anspruch 5,
**dadurch gekennzeichnet,**
- **dass** in die Kontaktzone (17) radial von der Zarge (5) abstehendes Zusatzelement eingesetzt und entlang der Kontaktzone (17) mit den beiden Längsseitenrändern (16) verschweißt wird, so dass das Zusatzelement in die Schweißverbindung (20) eingebunden ist.

## Claims

1. Ring filter element (1) for filtering a fluid, preferably a liquid,
- with an annular filter body (2) of a filter material (3) and through which the fluid can flow in order to filter the fluid,
- with an annular frame (5) through which the fluid can flow and on which the filter body (2) is radially supported, the frame having a frame longitudinal center axis (6),
- wherein the frame (5) is produced with a strip (9) which is wound in a helical manner about the frame longitudinal center axis (6) and which has radial holes (10) through which fluid can flow through the frame (5),
- wherein the strip (9) has a longitudinal strip direction (11) which extends helically about the frame longitudinal center axis (6) and a transverse strip direction (12) which extends transversely relative to the longitudinal strip direction (11),
- wherein the holes (10) in the strip (9) form multiple hole rows (13) which are adjacent in the transverse strip direction (12) and in which the holes (10) follow each other in the longitudinal strip direction (11),
- wherein the holes (10) within the respective hole row (13) have a longitudinal hole spacing (14) from each other in the longitudinal strip direction (11),
- wherein the holes (10) of hole rows (13) which are adjacent in the transverse strip direction (12) have a transverse hole spacing (15) from each other in the transverse strip direction (12),
- wherein the strip (9) is a metal strip (9),
- wherein the longitudinal hole spacing (14) is smaller than the transverse hole spacing (15), and
- wherein the metal strip (9) has at least one reinforcement bead (22) which extends parallel with the longitudinal strip direction (11) and which is arranged in the transverse strip direction (12) between two longitudinal side edges (16) of the metal strip (9) which extend parallel with the longitudinal strip direction (11) and which are spaced apart from each other in the transverse strip direction (12).

2. Ring filter element (1) according to claim 1,
**characterized in that**
- the holes (10) are configured as elongate holes and in each case have a longitudinal hole direction (18),
- the longitudinal hole direction (18) is inclined with respect to the longitudinal strip direction (11) and with respect to the transverse strip direction (12).

3. Ring filter element (1) according to claim 2,
**characterized in that**
- the longitudinal hole direction (18) is inclined with respect to the longitudinal strip direction (11) through an inclination angle (19) of a maximum of 45°.

4. Ring filter element (1) according to claim 2 or 3,
**characterized in that**
- the holes (10) are configured in a diamond-shaped manner and have two diagonals of different lengths, wherein the longer diagonal defines the longitudinal hole direction (18).

5. Ring filter element (1) according to any one of the preceding claims,
**characterized in that**
- the metal strip (9) has two longitudinal side edges (16) which extend parallel with the longitudinal strip direction (11) and are spaced apart from each other in the transverse strip direction (12), the side edges adjoining each other along a helically extending contact zone (17) and being welded to each other.

6. Ring filter element (1) according to claim 5,
**characterized in that**
- the metal strip (9) has at least at one longitudinal side edge (16) a reinforcement bead (22) which extends in the contact zone (17) and which is incorporated in the weld connection (20).

7. Ring filter element (1) according to any one of the preceding claims,
**characterized in that**
- the metal strip (9) has multiple reinforcement bumps (23) which extend in the longitudinal strip direction (11) and in the transverse strip direction (12).

8. Ring filter element (1) according to claim 7,
**characterized in that**
- the reinforcement bumps (23) are arranged in the transverse strip direction (12) between such a reinforcement bead (22) and the adjacent longitudinal side edge (16) or between two reinforcement beads (22) which are adjacent in the transverse strip direction (12).

9. Ring filter element (1) according to claim 7 or 8,
**characterized in that**
- the reinforcement bumps (23) are sized and arranged in such a manner that they are located exclusively between adjacent holes (10) or
- **in that** the reinforcement bumps (23) are sized and arranged in such a manner that at least one hole (10) is located therein.

10. Ring filter element (1) according to any one of the preceding claims,
**characterized in that**
- the holes (10) are stamped so that a stamping burr (24) which surrounds the respective hole (10) and which protrudes from the metal strip (9) at a side (25) of the metal strip (9) is formed,
- **in that** the stamping burrs (24) of the stamped holes (10) protrude at the same side (25) of the metal strip (9),
- **in that** the metal strip (9) is wound in such a manner that the stamping burrs (24) of the stamped holes (10) protrude radially on the frame (5).

11. Ring filter element (1) according to claim 10,
**characterized in that**
- the frame (5) is configured as an inner frame which is arranged within the filter body (2), wherein the stamping burrs (24) protrude radially inwards on the inner frame, or
- **in that** the frame (5) is configured as an outer frame which is arranged outside the filter body (2), wherein the stamping burrs (24) protrude radially outwards on the outer frame.

12. Ring filter element (1) according to any one of the preceding claims,
**characterized in that**
- the holes (10) in at least two adjacent hole rows (13) have an offset (29) from each other in the longitudinal strip direction (11),
- **in that** this offset (29), a frame diameter (28) of the frame (5) and a strip width (30) measured in the transverse strip direction (12) of the metal strip (9) are adapted to each other in such a manner that holes (10) which follow each other on the frame (5) in a frame longitudinal direction (21) which extends parallel with the frame longitudinal center axis (6) are offset from each other in a circumferential frame direction (31) which extends about the frame longitudinal center axis (6).

13. Ring filter element (1) at least according to claim 5,
**characterized in that**
- the region of the weld connection (20) is configured to be raised radially inwards and/or radially outwards during welding by means of a supplementary material feed, and/or
- **in that** during welding materials which, when the weld bath hardens, bring about a local brittleness and consequently a local increase in rigidity are melted into the weld connection (20).

14. Ring filter element (1) at least according to claim 5,
**characterized in that**
- in the contact zone (17) a supplementary element which protrudes radially from the frame (5) is inserted and welded along the contact zone (17) to the two longitudinal side edges (16) so that the supplementary element is incorporated in the weld connection (20).

## Revendications

1. Élément filtrant annulaire (1) destiné à filtrer un fluide, de préférence un liquide,
- avec un corps filtrant annulaire (2) constitué d'un matériau filtrant (3), qui peut être traversé par le fluide pour filtrer le fluide,
- avec une armature annulaire (5), qui peut être traversée par le fluide, sur lequel le corps filtrant (2) s'appuie radialement et présente un axe longitudinal central (6),
- dans lequel l'armature (5) est fabriquée avec une bande (9), qui est enroulée en hélice autour de l'axe longitudinal médian d'armature (6) et présente des trous radiaux (10) à travers lesquels l'armature (5) peut être traversée par le fluide,
- dans lequel la bande (9) présente une direction longitudinale de bande (11) qui s'étend en hélice autour de l'axe longitudinal médian d'armature (6) et une direction transversale de bande (12) qui s'étend transversalement à la direction longitudinale de bande (11),
- dans lequel les trous (10) dans la bande (9) forment plusieurs rangées de trous (13) adjacentes dans la direction transversale de bande (12), dans lesquelles les trous (10) se succèdent dans la direction longitudinale de bande (11),
- dans lequel les trous (10) à l'intérieur de la rangée de trous respective (13) présentent une distance longitudinale de trous (14) les uns des autres dans la direction longitudinale de bande (11),
- dans lequel les trous (10) de rangées de trous (13) qui sont adjacentes dans la direction transversale de bande (12) présentent un écartement transversal (15) les uns des autres dans la direction transversale de bande (12),
- dans lequel la bande (9) est une bande métallique (9),
- dans lequel la distance longitudinale de trous (14) est inférieure à la distance transversale de trous (15), et
- dans lequel la bande métallique (9) présente au moins une nervure de renfort (22) s'étendant parallèlement à la direction longitudinale de bande (11), qui est disposée dans la direction transversale de bande (12) entre deux bords latéraux longitudinaux (16) de la bande métallique (9) s'étendant parallèlement à la direction longitudinale de bande (11) et espacés l'un de l'autre dans la direction transversale de bande (12).

2. Élément filtrant annulaire (1) selon la revendication 1,
**caractérisé en ce que**
- les trous (10) sont conçus en tant que trous oblongs et présentent respectivement une direction longitudinale de trous (18),
- la direction longitudinale de trous (18) est inclinée par rapport à la direction longitudinale de bande (11) et par rapport à la direction transversale de bande (12).

3. Élément filtrant annulaire (1) selon la revendication 2,
**caractérisé en ce que**
- la direction longitudinale de trous (18) est inclinée par rapport à la direction longitudinale de bande (11) d'un angle d'inclinaison (19) de maximum 45°.

4. Élément filtrant annulaire (1) selon la revendication 2 ou 3,
**caractérisé en ce que**
- les trous (10) sont conçus en forme de losange et présentent deux diagonales de longueurs différentes, dans lequel la diagonale la plus longue définit la direction longitudinale de trous (18).

5. Élément filtrant annulaire (1) selon l'une quelconque des revendications précédentes,
**caractérisé en ce que**
- la bande métallique (9) présente deux bords latéraux longitudinaux (16) parallèles à la direction longitudinale de bande (11) et espacés l'un de l'autre dans la direction transversale de bande (12), qui sont adjacents l'un à l'autre le long d'une zone de contact (17) s'étendant en hélice et sont soudés l'un à l'autre.

6. Élément filtrant annulaire (1) selon la revendication 5,
**caractérisé en ce que**
- la bande métallique (9) présente, sur au moins un bord latéral longitudinal (16), une nervure de renfort (22) s'étendant dans la zone de contact (17) et intégrée dans la liaison soudée (20).

7. Élément filtrant annulaire (1) selon l'une quelconque des revendications précédentes,
**caractérisé en ce que**
- la bande métallique (9) présente plusieurs bossages de renfort (23) qui s'étendent dans la direction longitudinale de bande (11) et dans la direction transversale de bande (12).

8. Élément filtrant annulaire (1) selon la revendication 7,
**caractérisé en ce que**
- les bossages de renfort (23) sont disposés dans la direction transversale de bande (12) entre une nervure de renfort (22) et le bord latéral longitudinal (16) adjacent à celle-ci ou entre deux nervures de renfort (22) adjacentes dans la direction transversale de bande (12).

9. Élément filtrant annulaire (1) selon la revendication 7 ou 8,
**caractérisé en ce que**
- les bossages de renfort (23) sont dimensionnés et disposés de sorte qu'ils se trouvent exclusivement entre des trous adjacents (10), ou
- les bossages de renfort (23) sont dimensionnés et disposés de sorte qu'au moins un trou (10) s'y trouve.

10. Élément filtrant annulaire (1) selon l'une quelconque des revendications précédentes,
**caractérisé en ce que**
- les trous (10) sont estampés de sorte que se forme une bavure d'estampage (24) qui entoure chaque trou (10), qui dépasse de la bande métallique (9) sur un côté (25) de la bande métallique (9),
- les bavures d'estampage (24) des trous estampés (10) dépassent du même côté (25) de la bande métallique (9),
- la bande métallique (9) est enroulée de sorte que les bavures d'estampage (24) des trous estampés (10) dépassent radialement de l'armature (5).

11. Élément filtrant annulaire (1) selon la revendication 10,
**caractérisé en ce que**
- l'armature (5) est conçue en tant qu'armature intérieure, qui est disposée à l'intérieur du corps de filtre (2), dans lequel les bavures d'estampage (24) dépassent radialement vers l'intérieur sur l'armature intérieure, ou
- l'armature (5) est conçue en tant qu'armature extérieure, qui est disposée à l'extérieur du corps de filtre (2), dans lequel les bavures d'estampage (24) dépassent radialement vers l'extérieur sur l'armature extérieure.

12. Élément filtrant annulaire (1) selon l'une quelconque des revendications précédentes,
**caractérisé en ce que**
- les trous (10) dans au moins deux rangées de trous adjacentes (13) présentent un décalage (29) les unes par rapport aux autres dans la direction longitudinale de bande (11),
- ce décalage (29), un diamètre d'armature (28) de l'armature (5) et une largeur de bande (30) de la bande métallique (9) mesurée dans la direction transversale de bande (12) sont adaptés les uns aux autres de sorte que des trous (10) qui, sur l'armature (5) parallèlement à l'axe longitudinal médian d'armature (6), se succèdent dans la direction longitudinale d'armature (21), sont décalés les uns par rapport aux autres dans la direction circonférentielle d'armature (31) autour de l'axe longitudinal médian d'armature (6).

13. Élément filtrant annulaire (1) selon au moins la revendication 5,
**caractérisé en ce que**
- la zone de la liaison soudée (20) est conçue de manière à être rehaussée radialement à l'intérieur et/ou radialement à l'extérieur lors du soudage grâce à un apport de matière supplémentaire, et/ou
- lors du soudage, des matériaux sont fondus dans la liaison soudée (20) qui, lors de la solidification du bain de soudure, provoquent une fragilisation locale et ainsi une augmentation locale de la rigidité.

14. Élément filtrant annulaire (1) selon au moins la revendication 5,
**caractérisé en ce que**
- un élément supplémentaire s'écartant radialement de l'armature (5) est inséré dans la zone de contact (17) et soudé le long de la zone de contact (17) avec les deux bords latéraux longitudinaux (16), de sorte que l'élément supplémentaire est intégré dans la liaison soudée (20).
